# EUROPÄISCHE PATENTSCHRIFT

(11) **EP 0 347 760 B1**
(45) Veröffentlichungstag und Bekanntmachung des Hinweises auf die Patenterteilung: **29.09.1993**
(21) Anmeldenummer: 89110916.7
(22) Anmeldetag: 16.06.1989
(51) Int. Cl.: C09D 7/12, C08K 5/42, C08F 2/26

(54) **Verwendung von wässrigen Kunststoffdispersionen**
Use of aqueous polymer dispersions
Utilisation des dispersions aqueuses de polymères

(30) Priorität: 18.06.1988 DE 3820754
(43) Veröffentlichungstag der Anmeldung: 27.12.1989
(73) Patentinhaber: RWE-DEA Aktiengesellschaft für Mineraloel und Chemie, 22204 Hamburg (DE)
(72) Erfinder: Zeibig, Winfried, Dr., D-4130 Moers 1 (DE); Hüskes, Heinrich, D-4150 Krefeld 29 (DE); Laping, Karl-Heinz, Dr., D-4130 Moers 2 (DE); Hausmann, Paul-Gerhard, D-4100 Duisburg 17 (DE)
(74) Vertreter: Schupfner, Gerhard D.

(56) Entgegenhaltungen:
- DE-A- 1 804 159

## Beschreibung

Die Erfindung bezieht sich auf die verwendung einer wäßrigen Kunstoffdispersion auf Basis von Homo- und/oder Copolymerisaten aus Acryl- und/oder Vinylpolymeren als Bindemittel zur Herstellung blockfester, nicht klebender, lösungsmittelfreier bzw. lösungsmittelarmer Dispersions lacke.

Aus Gründen des Umweltschutzes und insbesondere des Gesundheitsschutzes ist es notwendig, die Lösemittelemission von Glanzlacken zu vermindern. So werden neuerdings auch für das Streichen von Türen, Fensterrahmen u.a. Dispersionslacke verwendet. Diese haben jedoch den Nachteil, schon bei Temperaturen unter 50°C zu blocken, d.h. gestrichenen und getrockneten Flächen verkleben, wenn sie zusammengepreßt werden, Fenster und Türen lassen sich dann nicht mehr öffnen.

In der EP-PS 0 184 091 wird die Herstellung einer nicht blockenden Kunststoffdispersion beschrieben. Das dort offenbarte Herstellungsverfahren ist jedoch ungewöhnlich kompliziert.

Andere Hersteller polymerisieren eine extrem "harte" Kunststoffdispersion mit sehr hoher Glastemperatur von über 40°C und setzen dieser Kunststoffdispersion zur Verfilmung große Mengen Lösemittel oder Weichmacher zu. Damit wird die Lösemittelemission von Alkydharz- und Acrylharzglanzlacken nur geringfügig vermindert. Außerdem haben Dispersionsglanzlacke, die mit diesen Kunststoffdispersionen hergestellt werden, die unangenehme Eigenschaft, die temporären Lösemittel und Weichmacher im Verlaufe der Zeit abzugeben, und führen dadurch zu spröden, rißanfälligen Überzügen. Sie bringen daher keine ausreichende Emissionsverminderung und verspröden.

Andererseits sind wäßrige Acrylharzdispersionen aber aus DE-A-1 804 159 bekannt, die verschiedene Acrylmonomere und Emulgatoren aufweisen. Diese Dispersionen werden hauptsächlich zur Textilimprägnierung eingesetzt und benötigen daher keine hohe Blockfestigkeit. Von daher sind als bevorzugte Emulgatoren auch Alkylphenolpolyglycolethersulfate und Fettalkoholsulfate vorgesehen, die die Blocktemperatur nicht beeinflussen.

Die Aufgabe der Erfindung ist es daher, eine wäßrige Kunststoffdispersion als Bindemittel für die Herstellung blockfester, nicht klebender, lösungsmittelfreier bzw. lösungsmittelarmer Dispersioneslacke bzw. Dispersionsglanzlacke herzustellen. Die so hergestellen Glanzlacke sollen bei Temperaturen unter 50 °C weder kleben noch verblocken.

Von der Industrie angestrebt wird eine Blockfestigkeit von über 50 °C. Temperaturen von 50 °C bis zu 70 °C werden von dunkel gestrichenen Fenster- und Türrahmen auf der Sonnenseite eines Hauses ohne weiteres durch Absorption der Sonneneinstrahlung erreicht. Mit solchen Kunststoffdispersionen sollen sich Lacke formulieren lassen, die klebefreie, nicht blockenden Filme bei niedriger Mindestfilmbildetemperatur und damit verbundener niedriger Glasübergangstemperatur des Polymerisates bilden und damit nur ein Minimum oder gar keine Lösemittel zur Verfilmung benötigen.

Diese Aufgabe wird erfindungsgemäß durch die Verwendung einer wäßrigen Kunststoffdispersion auf Basis von Homo- und/oder Copolymerisaten aus Acryl- und/oder Vinylpolymeren und Emulgatoren gelöst, die zusätzlich als Aktivsubstanz(en) ein oder mehrere N-substituierte(s) Sulfobernsteinsäureamid(e) der allgemeinen Formeln I oder II 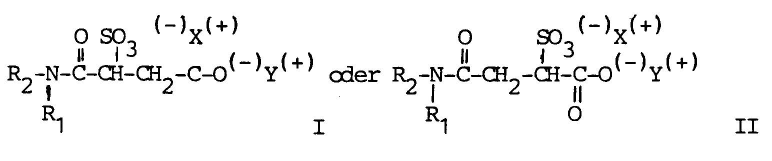
worin
- R₁: eine Alkyl- oder Alkylarylgruppe mit C₈ bis C₂₀-Kohlenwasserstoffatomen,
- R₂: Wasserstoff oder die 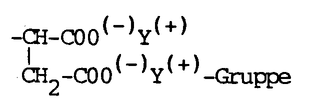 und
- X, Y: gleich oder verschiedenen H, NH₄ oder ein Alkalimetallatom bedeuten,
in einer Konzentration der Aktivsubstanz, bezogen auf die Gesamtmenge der Kunststoffdispersion, von 0,1 bis 6 Gew. %, bevorzugt von 0,5 bis 5 Gew.% und insbesondere von 1,5 bis 3 Gew.%, enthält.

Überraschenderweise wurde nämlich gefunden, daß diese N-substituierten Sulfobernsteinsäureamide und deren Salze die Blocktemperatur von Kunststoffdispersionen und Dispersionslacken erheblich erhöhen.

Gegenstand der Erfindung ist insbesondere die verwendung einer wäßrigen Kunstoffdispersion, die diese Aktivsubstanzen in einer Konzentration
von 0,05 bis 5 Gew.%,
bevorzugt von 0,1 bis 2 Gew.%,
insbesondere von 0,15 bis 0,5 Gew.%,
bezogen auf die Gesamtmenge der Monomeren der Kunststoffdispersionen, enthält.

Gegenstand der Erfindung ist insbesondere auch die verwendung einer wäßrigen Kunststoffdispersion als Vorkonzentrat zum Abmischen der Dispersionslacke, die diese Aktivsubstanzen in einer Konzentration
von 5 bis 25 Gew.%
bevorzugt von 7,5 bis 15 Gew.%, und
insbesondere von 9 bis 12 Gew.%, etwa 10 Gew.%,
bezogen auf die Gesamtmenge der Monomeren der Kunststoffdispersionen, enthält.

Gegenstand der Erfindung ist insbesondere auch einen wäßrige Kunststoffdispersion, die diese Aktivsubstanzen in einer Konzentration
von 0,05 bis 5 Gew.%,
bevorzugt von 0,1 bis 2 Gew.%,
insbesondere von 0,15 bis 1 Gew.%,
bezogen auf die Gesamtmenge der Dispersionsfarben-Formulierung, enthält.

Eine bevorzugte wäßrige Homo- und/oder Copolymerisatdispersion als Basis für die wäßrige Kunststoffdispersion weist - bezogen auf Festsubstanz - die folgende Monomeren-Zusammensetzung, bezogen auf 100 Gew.% auf:
(a) 5 bis 100 Gew. % eines aromatischen Vinylmonomeren, insbesondere eines Vinylbenzols, das mit C₁ bis C₄-Alkylgruppen im Kern oder in der Vinylgruppe substituiert sein kann, wie Styrol, alpha-Methylstyrol, Vinyltoluol, und/oder von tert-Butylacrylat oder eines (Meth)acrylsäureesters mit einer C₁ bis C₅-Monoalkoholkomponente und/oder eines Vinylesters mit einer C₁ bis C₁₁ -Monocarbonsäurekomponente wie Vinylacetat, VeoVa® 9 oder eines Gemisches solcher Monomeren, jeweils mit einer Homopolymerisatglastemperatur Tg der einzelnen Monomeren über 35°C, und/oder
(b) 5 bis 100 Gew. % eines Acrylesters mit einer C₁ bis C₈-Monoalkoholkomponente und/oder eines (Meth)acrylsäureesters mit einer C₅ bis C₁₀-Monoalkoholkomponente und/oder eines Vinylesters wie VeoVa® 10 (VeoVa® = Versaticsäurevinylester), und/oder Gemisches solcher Monomeren, jeweils mit einer Homopolymisatglastemperatur Tg der einzelnen Monomeren unter 35°C, sowie
(c) 0 bis 20 Gew.% eines monoolefinisch ungesättigten (Meth)acrylat-Monomeren mit einer C₁ bis C₈-Alkanolkomponente, wie Hydroxyethyl(meth)acrylat, Hydroxpropyl (meth)acrylat,
(d) 0 bis 20 Gew.% eines veretherten N-Alkylol(meth)-acrylamides der allgemeinen Formel

   CH₂=C(R₁)-C(O)-NH-(A)-O-R₂,

   worin
   - R: Wasserstoff oder Methyl,
   - A: n- oder iso-Alkylen mit 1 bis 4 Kohlenstoffatomen und
   - R₂: C₁ bis C₄-Alkyl bedeuten,
(e) 0 bis 10 Gew.% einer alpha, beta-ungesättigten Monocarbonsäure mit 3 bis 5 Kohlenstoffatomen und/oder einer alpha, beta-ungesättigten Dicarbonsäure mit 3 bis 5 Kohlenstoffatomen, oder eines Gemisches solcher Monomeren, und
(f) 0 bis 4 Gew. % eines alpha, beta-ungesättigten Monocarbonsäureamids mit 3 bis 5 Kohlenstoffatomen und/oder eines alpha, beta-ungesättigten Dicarbonsäureamids mit 4 bis 5 Kohlenstoffatomen oder eines Gemisches solcher Monomeren.

Um die gewünschten Eigenschaften ohne Verwendung größerer Mengen Filmbildehilfsmittel einzustellen, soll die Glasübergangstemperatur Tg dieser aus der obigen Monomerenkombination hergestellten Polymerdispersionen einen Wert von unter 50°C aufweisen. Die Mindestfilmbildetemperatur liegt bevorzugt in einem Bereich zwischen 0 und 30°C.

Der Einbau von ungesättigten Carbonsäuren (e) in das Copolymerisat erhöht die Stabilität der Dispersion. Bei der Herstellung von hochglänzenden Lacken treten bei der Pigmentierung sehr hohe Scherkräfte auf, die bei herkömmlichen Dispersionen zur Koagulation führen können. Aus diesem Grund enthält das Polymerisat insbesondere 0,5 bis 5, vorzugsweise 1 bis 3 Gew. %, einer alpha, beta-ungesättigten Monocarbonsäure mit vorzugsweise 4 oder 5 Kohlenstoffatomen und/oder einer ungesättigten Dicarbonsäure mit vorzugsweise 4 oder 5 Kohlenstoffatomen oder einer Mischung solcher Monomerer. Geeignete Säuren sind Acrylsäure, Methacrylsäure, Crotonsäure, Maleinsäure, Fumarsäure und Itaconsäure. Bevorzugt werden Acrylsäure und/oder Methacrylsäure eingesetzt.

Außerdem enthält das Polymerisat noch 0 bis 4 Gew. %, eines alpha-beta-ungesättigten Monocarbonsäureamides und/oder eines ungesättigten Dicarbonsäureamides oder eines Gemisches solcher Monomerer. Diese Monomere tragen zur Stabilisierung bei der Herstellung und Verarbeitung bei. Außerdem dient ihr Gehalt zur Einstellung der gewünschten Teilchengröße. Bevorzugt werden 0,5 bis 1,5 Gew.%, eingesetzt.

Die Dispersion besitzt einen Feststoffgehalt von 30 bis 60 Gew. %, vorzugsweise 40 bis 50 Gew. %. Sie enthält neben dem Polymerisat außerdem einen oder mehrere Emulgatoren, von denen mindestens einer ein N-substituiertes Sulfobernsteinsäureamid der angegebenen Formel oder ein Salz davon ist.

Beispiele für verwendbare anionische Emulgatoren neben den N-substituierten Sulfobernsteinsäureamiden oder deren Salzen sind Alkalisalze von Schwefel- oder Phosphorsäureteilestern von Alkoholen, oxethylierten Alkylphenolen oder oxethylierten Alkoholen, sowie Alkyl- oder Arylsulfonate. Außerdem sind Salze von Sulfobernsteinsäureestern und -habestern geeignet. Vorzugsweise werden Sulfobernsteinsäurehalbester, Alkanolsulfate und oxethylierte Alkylphenolsulfate in einer Menge von 0,1 bis 5 Gew.%, bezogen auf Monomere (a) bis (e) gleich 100, eingesetzt.

Zur Erhöhung der Stabilität der Dispersion werden vorzugsweise ein oder mehrere nichtionische Emulgatoren vom Typ eines oxethylierten Alkylphenols oder Fettalkohols, z.B. Nonylphenol mit 4 bis 50 Mol Ethylenoxid, in einer Menge von 0,1 bis 5, vorzugsweise 0,5 bis 2 Gew.% auf die Monomeren (a) bis (e) gleich 100, eingesetzt.

Als Initiator eignen sich die üblichen Ammonium-, Natrium- und Kaliumsalze der Peroxodischwefelsäure und der Peroxodiphosphorsäure. Es können auch organische Peroxide u.ä. wie Dibenzoylperoxid oder tert-Butylhydroperoxid eingesetzt werden. Als Aktivatoren können Natriumdisulfit, Hydrazin, Hydroxylamin und ähnliche Reduktionsmittel eingesetzt werden. Als Beschleuniger der Polymerisationsreaktion können ferner Salze von Übergangsmetallen, wie z.B. von Cobalt, Eisen oder Vanadin, eingesetzt werden.

Das Polymerisationsverfahren wird als Emulsionspolymerisation in einem wäßrigen Medium in bekannten Apparaten, wie einem Rührkessel mit Heiz- und Kühlvorrichtung, durchgeführt. Dabei sind die Monomeren in einem wäßrigen Medium emulgiert. Die Zugabe der Monomeren kann so erfolgen, daß eine Lösung aus dem gesamten Wasser, dem Emulgator und einem Teil des Initiators vorgelegt wird und das Monomerengemisch und der Rest des Initiators bei Polymerisationstemperatur langsam zugegeben wird. Weiterhin ist es möglich, einen Teil des Wassers, der Emulgatoren und des Initiators vorzulegen, aus den Monomeren, dem restlichen Wasser, den restlichen Emulgatoren und dem restlichen Initiator eine Voremulsion herzustellen und diese bei Polymerisationstemperatur langsam einzuspeisen. Ferner besteht die Möglichkeit, einen Teil des Wassers, der Monomeren, der Emulgatoren und des Initiators vorzulegen und aus den restlichen Bestandteilen eine Präemulsion herzustellen. Bei diesen vorzugsweisen Verfahren wird die Vorlage aufgeheizt und dann die Präemulsion bzw. die Monomermischung langsam bei Polymerisationstemperatur im Verlaufe von 1 bis 4 Stunden zugespeist.

Die Polymerisationstemperatur liegt in einem Bereich von 50 bis 100°C, vorzugsweise 80 bis 95°C. Nach beendeter Zugabe des Monomerengemisches bzw. der Voremulsion wird der Ansatz noch 0,5 bis 3 Stunden bei 50 bis 100°C, vorzugsweise bei 80 bis 95°C zur Restmonomerenverminderung gerührt.

Die durch das Polymerisationsverfahren erhaltenen Polymerisate haben Glasübergangstemperaturen im Bereich von 0 bis +60°C, vorzugsweise zwischen +10 und +40°C. Das Verfahren führt zu Polymerisaten, die eine mittlere Teilchengröße zwischen 30 und 400 nm, bevorzugt zwischen 80 und 180 nm, aufweisen.

Die erhaltenen Polymerdispersionen können zu Klarlacken oder zu pigmentierten Lacken formuliert werden. Bei der Herstellung von pigmentierten Systemen geht man so vor, daß ein Teil oder die gesamte benötigte Dispersionsmenge mit Pigmenten und/oder Füllstoffen sowie den üblichen Lackhilfsmitteln und ggf. Neutralisationsmitteln zu einer Pigmentpaste angerieben wird. Im bevorzugten Fall wird nur ein Teil der Dispersion vorgelegt und die restliche Dispersionsmenge nach dem Anreiben der Pigmentpaste zugesetzt.

Die getrockneten pigmentierten oder nicht pigmentierten Lackfilme der auf Basis der Polymerisatdispersion hergestellten Überzugsmittel weisen einen hervorragenden Verlauf aus. Die oft zu beobachtenden Oberflächenstörungen, beispielsweise Kraterbildung, Orangenschaleneffekt, Schrumpf- und Spannungsrisse sowie Stippen- und Porenbildung sind nicht vorhanden. Außerdem zeigen diese Lackfilme gute Deckkraft, Glätte (Slipeffekt), Elastizität, Glanz, Haftung, Wetterbeständigkeit und Vergilbungsresistenz.

Es ist relativ unerheblich, ob das oder die N-substituierten Sulfobernsteinsäureamide oder deren Ammonium- oder Alkalisalze vor der Polymerisation einer Kunststoffdispersion zugesetzt werden oder eine herkömmliche Dispersion mit einer ein oder mehrere N-substituierte Sulfobernsteinsäureamide bzw. deren Salze enthaltenden zweiten Dispersion gemischt wird. Es ist ebenso möglich, einer geeigneten herkömmlichen Dispersion ein oder mehrere N-substituierte Sulfobernsteinsäureamide bzw. deren Salze zuzusetzen oder diese erst bei der Herstellung der Glanzlacke zuzusetzen.

Als Basis der Homopolymerisatdispersionen kommen insbesondere Methylacrylat, Ethylacrylat und Isopropylacrylat zusammen mit den obengenannten Hilfsmonomeren zum Einsatz.

Die folgenden Beispiele dienen der Erläuterung der Erfindung. Prozentangaben und Verhältnisangaben beziehen sich jeweils auf das Gewicht.

Die Bestimmung der Blockfestigkeit wird wie folgt durchgeführt. Es werden 300-µ-Naßfilme auf Leneta^{(R)} -Folie mit einem Spaltrakel aufgezogen und dann 20 Stunden bei 50°C im Trockenschrank getrocknet. Die beschichtete Folie wird dann in 1 cm breite Längsstreifen geschnitten und diese Streifen mit ihren beschichteten Seiten aufeinandergelegt. Diese Doppelstreifen werden auf eine Gradientenbank gelegt, die ein Temperaturgefälle von 30 bis 70°C aufweist. Die Doppelstreifen werden mit 100 g.cm⁻² drei Stunden lang belastet. Dann werden die Doppelstreifen von der Bank abgenommen, dreißig Minuten auf Raumtemperatur abgekühlt und per Hand auseinandergezogen. Es wird die Stelle bestimmt, ab der die Filme zusammenkleben oder sich an Hand des Aussehens ihrer Oberfläche gegenseitig beeinflußt haben. Die an dieser Stelle auf der Gradientenbank vorhanden gewesenen Temperatur wird als "Blocktemperatur" definiert.

### Beispiel 1:

Es wurde eine Kunststoffdispersion (Klardispersion) nach folgendem Verfahren hergestellt:

### Formulierung Nr.1:

| Startlösung: | |
|---|---|
| Entmineralisiertes Wasser | 5,312 kg |
| Natrium-octylphenyl-25EO-sulfat (30 % in Wasser) | 0,145 kg |
| Nonylphenyl-30-ethylenoxid (25 %ig in Wasser) | 0,290 kg |
| Natriumperoxodisulfat (5 %ig in Wasser) | 0,724 kg |
| Entschäumer | 0,003 kg |

| Präemulsion: | |
|---|---|
| Entmineralisiertes Wasser | 5,312 kg |
| Natrium-octylphenyl-25EO-sulfat (30 % in Wasser) | 0,483 kg |
| Nonylphenyl-30-ethylenoxid (25 %ig in Wasser) | 0,580 kg |
| Natriumperoxodisulfat (5 %ig in Wasser) | 1,450 kg |
| Methylmethacrylat | 6,723 kg |
| n-Butylacrylat | 6,723 kg |
| VeoVa^{(R)} 10 (Shell) | 0,700 kg |
| Methacrylsäure | 0,290 kg |
| Acrylamid | 0,058 kg |
| Entschäumer | 0,007 kg |

| Konfektionierung: | |
|---|---|
| Microzid | 0,044 kg |
| Natronlauge (12,5 %ig in Wasser) | ca.1,0 kg |
| (pH: 7,5) | |

### Herstellung:

Die Startlösung wurde ohne Natriumperoxodisulfat auf 80°C aufgeheizt, dann die Natriumperoxodisulfat-Lösung zugegeben. Sobald die Reaktortemperatur wieder die 80°C erreicht hatte, wurde mit der Einspeisung der Präemulsion begonnen. In den ersten 45 Minuten wurde die Präemulsion vom 1/5 der Endeinspeisungsgeschwindigkeit gleichmäßig zunehmend bis zur Endeinspeisegeschwindigkeit steigend in den Reaktor gepumt. Ab der 45. Minute wurde ein konstanter Strom an Präemulsion dem Reaktor zugeführt. Nach 90 Minuten war die Präemulsion eingespeist und die Reaktionstemperatur auf 85-87°C gestiegen. Es folgte eine 90-minütige Nachreaktion bei 85-90°C. Danach wurde gekühlt und bei ca. 60°C Microzid zugesetzt. Mit Natronlauge wurde auf pH 7,5 eingestellt und über ein 63 µ-Sieb filtriert.

Dieser Kunststoffdispersion wurden jeweils 0,25 Gew.% Aktivsubstanz der folgenden Tenside zugesetzt und die Blockfestigkeit dieser Mischungen bestimmt:

| Additiv | | Blockfestigkeit (°C) |
|---|---|---|
| (X) | Kein Zusatztensid | < 30 |
| (A) | Di-Natrium-N-lauryl-sulfosuccinamid | 65 |
| (B) | Di-Natrium-N-octadecyl-N-sulfosuccinamid | 60 |
| (C) | Tetra-Natrium-N-octadecyl-N-dicarboxy-ethyl-sulfosuccinamid | 65 |
| (D) | Di-Natrium-N-octadecylethanolamidosulfosuccinat | < 30 |
| (E) | Natrium-nonylphenyl-25-ethylenoxidsulfat | < 30 |
| (F) | Di-Natrium-(lauryl-4-ethylenoxid)-sulfosuccinat | < 30 |
| (G) | Natrium-di-2-ethylhexyl-sulfosuccinat | < 30 |
| (H) | Natriumlaurylsulfat | < 30 |
| (I) | Tri-Natrium-N-octadecyl-ethylendiamintriacetat | < 30 |
| (J) | Talgfettalkohol-11-ethylenoxid-ethanol | < 30 |
| (K) | Talgfettalkohol-25-ethylenoxid-ethanol | < 30 |
| (L) | Nonylphenyl-10-ethylenoxid-ethanol | < 30 |
| (M) | Nonyphenyl-30-ethylenoxid-ethanol | < 30 |
| (N) | Mischung Natrium-di-nonylphenyl-6-ethylenoxid-phosphat und Di-natrium-nonylphenyl-6-ethylenoxid-phosphat | < 30 |
| (O) | Mischung Natrium-di-lauryl-4-ethylenoxidphosphat und Di-natrium-lauryl-4-ethylenoxid-phosphat | < 30 |

### Beispiel 2:

Mit der in Beispiel 1 beschriebenen Formulierung Nr. 1 und den Additiven (A) bis (O) wurden Glanzlacke nach folgender Formulierung hergestellt.

### Formulierung Nr.2:

| | | |
|---|---|---|
| (1) | 2-Methylaminopropanol | 2,0 g |
| (2) | Disperse Ayd^{(R)} W 22 (DANIELS PRODUCTS) | 18,0 g |
| (3) | Natriumpolyacrylat | 4,0 g |
| (4) | Propandiol-1,2 | 25,0 g |
| (5) | Methoxybutanol | 15,0 g |
| (6) | Butyldiglykol | 7,5 g |
| (7) | Surfynol^{(R)}440 (ICI) | 3,0 g |
| (8) | Entschäumer | 1,0 g |
| (9) | Additiv (A bis O) (100 % Aktivsubstanz) | 1,75 g |
| (10) | Titandioxid (Rutiltyp) | 230,0 g |
| (11) | Dispersion (50 %ig)-Formulierung Nr.1 | 590,0 g |
| (12) | Wasser | 88,5 g |

Die Bestandteile 1 bis 10 wurden nacheinander unter Rühren gemischt und anschließend 20 Minuten gut mit einem Dissolver dispergiert. Danach wurde mit der Dispersion aufgelackt und mit Wasser die Verarbeitungsviskosität eingestellt.

### Beispiel 3:

Es wurden Glanzlacke nach der Rezeptur Formulierung Nr.2 hergestellt. Jedoch wurde das Additiv nicht zugegeben, sondern die Formulierung Nr. 1 vorher mit jeweils 0,30 Gew.% der Additive (A) bis (O) gemischt und diese Dispersionen dann in der Formulierung Nr. 2 verwendet.

Die Blocktemperaturen der Glanzlacke wurden nach dem gleichen Verfahren wie bei der Prüfung der Klardispersion bestimmt.

| Ergebnisse: | | |
|---|---|---|
| Additiv | Blockfestigkeit (°C) | |
| | Beispiel 2 | Beispiel 3 |
| ohne | < 30 | < 30 |
| (A) | > 70 | > 70 |
| (B) | > 70 | 68 |
| (C) | 65 | 65 |
| (D) | < 30 | < 30 |
| (E) | < 30 | < 30 |
| (F) | < 30 | < 30 |
| (G) | < 30 | < 30 |
| (H) | < 30 | < 30 |
| (I) | < 30 | < 30 |
| (J) | < 30 | < 30 |
| (K) | < 30 | < 30 |
| (L) | < 30 | < 30 |
| (M) | < 30 | < 30 |
| (N) | < 30 | < 30 |
| (O) | < 30 | < 30 |

### Beispiel 4:

Es wird eine Kunststoffdispersion nach folgendem Verfahren hergestellt:

### Formulierung Nr. 3:

| Startlösung: | |
|---|---|
| Entmineralisiertes Wasser | 182,0 g |
| Tetra-Natrium-N-(1,2-dicarboxy-ethyl)-N-octadecyl-sulfosuccinamid (35 %ig) | 7,9 g |
| Ammoniumperoxodisulfat (5 %ig in Wasser) | 19,8 g |
| Entschäumer | 0,03 g |

| Präemulsion: | |
|---|---|
| Entmineralisiertes Wasser | 284,8 g |
| Tetra-natrium-N (1,2-dicarboxy-ethyl)-N-octadecyl-sulfosuccinamid (35 %ig) | 99,7 g |
| Ammoniumperoxodisulfat (5 %ig in Wasser) | 31,6 g |
| Methylmethacrylat | 381,4 g |
| Methacrylsäure | 15,3 g |
| Acrylamid (30 %ig) | 3,8 g |
| Entschäumer | 0,02 g |
| Ammoniak (25 %ig) | 11,0 g |

| Konfektionierung: | |
|---|---|
| Microzid | 3,2 g |

### Herstellung:

Die Startlösung wurde ohne Ammoniumperoxodisulfat auf 80°C aufgeheizt, dann die Ammoniumperoxodisulfatlösung zugegeben. Sobald die Reaktortemperatur wieder die 80 °C erreicht hatte, wurde mit der Einspeisung der Präemulsion begonnen.

In den ersten 45 Minuten wurde die Präemulsion vom 1/5 der Endeinspeisegeschwindigkeit gleichmäßig zunehmend bis zur Endeinspeisegeschwindigkeit steigend in den Reaktor gepumpt. Ab der 45. Minute wurde ein konstanter Strom an Präemulsion dem Reaktor zugeführt. Nach 90 Minuten war die Präemulsion eingespeist und die Reaktionstemperatur auf 85-87 °C gestiegen. Es folgte eine 30-minütige Nachreaktion bei 85-90 °C. Danach wurde gekühlt, bei ca. 60 °C Microzid zugesetzt und über ein 63 µ-Sieb filtriert.

Der im Beispiel 1 beschriebenen Formulierung Nr. 1 wurden 11, 25 und 43 Gew.% der Formulierung Nr. 3 zugesetzt und durch Rühren homogenisiert. Dann wurde die Blocktemperatur der Dispersionsmischungen gemessen und mit diesen Mischungen Glanzlacke nach der im Beispiel 2 beschriebenen Formulierung Nr. 2 jedoch ohne Additiv hergestellt und ebenfalls deren Blocktemperatur bestimmt.

| Mischungsanteil Formulierung Nr. 3 (%) | Blockfestigkeit (°C) von | |
|---|---|---|
| | Disp.mischung | Glanzlack |
| 0 | < 30 | < 30 |
| 11 | 50 | > 70 |
| 25 | 65 | > 70 |
| 43 | > 70 | > 70 |

### Beispiel 5:

Es wurde eine Kunststoffdispersion nach folgendem Verfahren hergestellt:

### Formulierung Nr. 4:

| Startlösung: | |
|---|---|
| Entmineralisiertes Wasser | 269,0 g |
| Natrium-nonylphenyl-25EO-sulfat (35% in Wasser) | 3,43 g |
| Nonylphenyl-30-ethylenoxid (25 %ig in Wasser) | 3,20 g |
| Natriumperoxodisulfat (5 %ig in Wasser) | 25,60 g |
| Entschäumer | 0,08 g |

| Präemulsion: | |
|---|---|
| Entmineralisiertes Wasser | 416,0 g |
| Natrium-nonylphenyl-25EO-sulfat (35% in Wasser) | 22,86 g |
| Tetra-Natrium-N-(1,2-dicarboxi-ethyl)-N-octadecyl-sulfosuccinamid (35 %ig) | 11,43 g |
| Nonylphenyl-30-ethylenoxid (25 %ig in Wasser) | 6,40 g |
| Natriumperoxodisulfat (5 %ig in Wasser) | 32,00 g |
| Methylmethacrylat | 348,32 g |
| n-Butylacrylat | 321,36 g |
| VeoVa^{(R)} 10 (SHELL) | 106,48 g |
| Methacrylsäure | 16,00 g |
| Methacrylamid | 8,00 g |
| Entschäumer | 0,12 g |

| Konfektionierung: | |
|---|---|
| Microzid | 1,60 g |
| Ammoniak (25 %ig) bis pH = 8,5 | ca. 5 g |

### Herstellung:

Die Startlösung wurde ohne Natriumperoxodisulfat auf 80 °C aufgeheizt, dann die Natriumperoxodisulfatlösung zugegeben. Sobald die Reaktortemperatur wieder die 80 °C erreicht hatte, wurde mit der Einspeisung der Präemulsion begonnen. In den ersten 45 Minuten wurde die Präemulsion vom 1/5 der Endeinspeisegeschwindigkeit gleichmäßig zunehmend bis zur Endeinspeisegeschwindigkeit steigend in den Reaktor gepumt. Ab der 45. Minute wurde ein konstanter Strom an Präemulsion dem Reaktor zugeführt. Nach 90 Minuten war die Präemulsion eingespeist und die Reaktionstemperatur auf 85-87 °C gestiegen. Es folgte eine 90-minütige Nachreaktion bei 85-90 °C. Danach wurde gekühlt und bei ca. 60 °C Microzid zugesetzt. Mit Ammoniak wurde auf pH 8,5 eingestellt, über ein 63 µ-Sieb filtriert und die Blockfestigkeit bestimmt:

| | |
|---|---|
| Blockfestigkeit | > 70 °C |

Mit der Formulierung Nr. 4 wurde ein Weißlack nach der Rezeptur der Formulierung Nr. 2 jedoch ohne Additiv hergestellt und die Blockfestigkeit bestimmt:

| | |
|---|---|
| Blockfestigkeit | > 70°C |

### Beispiel 6:

Handelsüblichen Reinacrylat- und Styrol-Acrylat-Kunststoffdispersionen wurden 0,175 Gew.% Aktivsubstanz Tetra-Natrium-N-octadecyl-N-(1,2-dicarboxy-ethyl)-sulfosuccinamid (ADD) zugesetzt und die Blockfestigkeit der Dispersionen mit und ohne ADD bestimmt.

| Handelsübliche Dispersion (Typ) | Blockfestigkeit (°C) der Dispersion | |
|---|---|---|
| | vor Zugabe von ADD | nach Zugabe von ADD |
| Styrol/n-Butylacrylat | < 30 | > 70 |
| Methylmethacrylat/n-Butylacrylat I | 42 | 45 |
| Methylmethacrylat/n-Butylacrylat II | 54 | > 70 |
| Methylmethacrylat/n-Butylacrylat III | 42 | > 70 |

Mit den ohne und mit ADD versetzten Dispersionen wurden Weißlacke nach Formulierung Nr. 2 ohne Additiv hergestellt und die Blockfestigkeit dieser Farben bestimmt.

| Handelsübliche Dispersion (Typ) | Blockfestigkeit (°C) des Glanzlacks | |
|---|---|---|
| | ohne ADD | mit ADD |
| Styrol/n-Butylacrylat | < 30 | > 70 |
| Methylmethacrylat/n-Butylacrylat I | 36 | 65 |
| Methylmethacrylat/n-Butylacrylat II | 65 | > 70 |
| Methylmethacrylat/n-Butylacrylat III | 38 | > 70 |

### Beispiel 7:

Es wurden Buntlacke der Formulierung Nr. 5 hergestellt:

| | | |
|---|---|---|
| (1) | 2-Methyl-amino-propanol | 2,0 g |
| (2) | Propandiol-1,2 | 35,0 g |
| (3) | Methoxybutanol | 15,0 g |
| (4) | Butyldiglykol | 7,5 g |
| (5) | Surfynol^{(R)}440 (ICI) | 3,0 g |
| (6) | Polyurethanverdicker | 6,0 g |
| (7) | Farbpaste HF^{(R)} (TENNECO) | 100,0 g |
| (8) | Dispersion | 660,0 g |
| (10) | Wasser | 122,5 g |

Die Bestandteile (1) bis (7) wurden nacheinander unter Rühren gemischt und anschließend 20 Minuten gut mit einem Dissolver dispergiert. Danach wurde mit der Dispersion aufgelackt und mit Wasser die Verarbeitungsviskosität eingestellt.

### Eingesetzte Dispersion:

- Beispiel 7a: Formulierung Nr. 1 versetzt mit 0,175 Gew.% Aktivsubstanz Tetra-Natrium-N-octadecyl-N-(1,2-dicarboxy-ethyl)sulfosuccinamid
- Beispiel 7b: Formulierung Nr. 1 gemischt mit 11 Gew.% Formulierung Nr. 3
- Beispiel 7c: Formulierung Nr. 4
- Beispiel 7d: Formulierung Nr. 1

| Blockfestigkeit des Buntlacks: | |
|---|---|
| Beispiel | Blockfestigkeit (°C) |
| 7a | 68 |
| 7b | > 70 |
| 7c | > 70 |
| 7d | < 30 |

## Patentansprüche

1. Verwendung einer wäßrigen Kunststoffdispersion auf Basis von Homo- und/oder Copolymerisaten aus Acryl- und/oder Vinylpolymeren und Emulgatoren, die zusätzlich als Aktivsubstanz(en) ein oder mehrere N-substituierte(s) Sulfobernsteinsäureamid(e) der allgemeinen Formeln I oder II 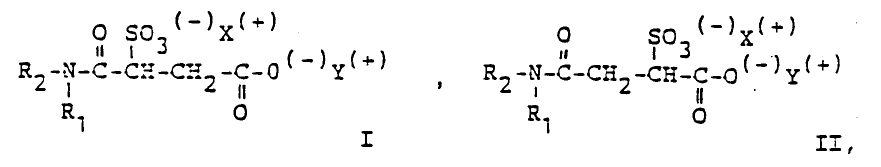 **worin**
R₁ eine Alkyl- oder Alkylarylgruppe mit C₈ bis C₂₀ - Kohlenwasserstoffatomen,
R₂ Wasserstoff oder die 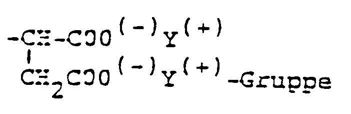 und
X, Y gleich oder verschiedenen H, NH₄ oder ein Alkalimetallatom bedeuten,
in einer Konzentration von 0,1 bis 6 Gew.-%, bezogen auf die Gesamtmenge der Kunststoffdispersion, enthält, als Bindemittel bei der Herstellung blockfester, nichtklebender, lösungsmittelfreier bzw. lösungsmittelarmer Dispersionslacke bzw. Dispersionsglanzlacke.

2. Verwendung nach Anspruch 1,
**dadurch gekennzeichnet**, daß in der Kunststoffdispersion das (die) Additiv(e) in einer Konzentration von 0,5 bis 5 Gew.-%, insbesondere von 1,5 bis 3 Gew.-%, bezogen auf die Gesamtmenge, vorhanden ist (sind).

## Claims

1. Use of an aqueous synthetic dispersion based on homo- and/or copolymerisates of acrylic and/or vinyl polymers and emulsifiers which additionally contains as active substance(s), in a concentration of 0.1 to 6 weight percent, referring to the total amount of synthetic dispersion, one or more N-substituted sulfosuccinic acid amide(s) of the general formulas I or II 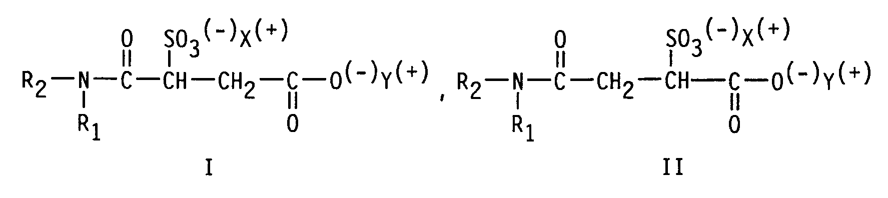 where
R₁ is an alkyl or alkylaryl group with C₈ to C₂₀ hydrocarbon atoms,
R₂ is hydrogen or the 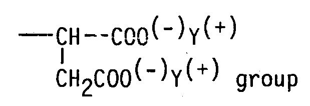 and
X, Y are same or different H, NH₄ or an alkali metal atom,
as a bonding agent for the preparation of blocking-resistant, tack-free, solvent-free or low-solvent emulsion lacquers or emulsion gloss paints.

2. Use according to claim 1 wherein the synthetic dispersion contains the active substance(s) in a concentration of 0.5 to 5 weight percent, particularly 1.5 to 3 weight percent, referring to the total amount.

## Revendications

1. Utilisation d'une dispersion synthétique aqueuse à base de homo- et/ou de copolymères de polymères acryliques et/ou vinyliques et d'émulsifiants contenant, en plus, en tant que substance(s) active(s), de 0,1 à 6 % en poids, par rapport à la quantité totale de la dispersion synthétique, d'un ou de plusieurs amide(s) N-substitué(s) de l'acide sulfosuccinique, de la formule générale I ou II, 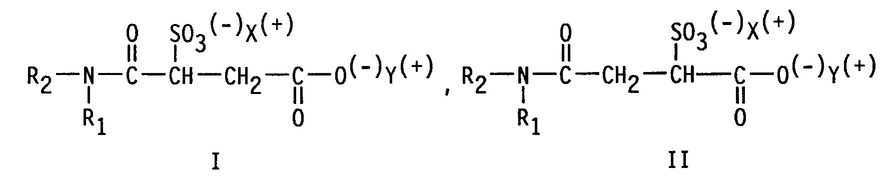 où
R₁ est un groupe alkylique ou alkylarylique contenant des atomes d'hydrocarbures C₈ à C₂₀,
R₂ est de l'hydrogène ou le groupe 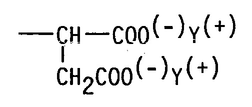 et
X, Y sont égaux à ou différents de H, NH₄ ou un atome de métal alcalin,
en tant que liant pour la préparation de peintures-émulsions ou de peintures-émulsions brillantes, sans solvant ou contenant peu de solvant, résistant au blocking et non-collantes.

2. Utilisation suivant la revendication 1, caractérisée en ce que la dispersion synthétique contient de 0,5 à 5 % en poids, particulièrement de 1,5 à 3 % en poids de la (les) substance(s) active(s), par rapport à la quantité totale.
